# FASCICULE DE BREVET EUROPEEN

(11) **EP 1 542 450 B1**
(45) Date de publication et mention de la délivrance du brevet: **20.03.2013**
(21) Numéro de dépôt: 04292942.2
(22) Date de dépôt: 10.12.2004
(51) Int. Cl.: G09G 5/06, H04N 1/405

(54) **Procédé et dispositif d'établissement de trames par diffusion d'erreurs de vecteurs issus de tables**
Verfahren und Anordnung zur Halbtonerzeugung mit Vektorfehlerdiffusion aus einer Tabelle
Method and arrangement for halftoning with error diffusion of vectors from a table

(30) Priorité: 12.12.2003 FR 0314608
(43) Date de publication de la demande: 15.06.2005
(73) Titulaire: SAGEMCOM DOCUMENTS SAS, 92500 Rueil Malmaison (FR)
(72) Inventeur: Sabatier, Pierre, 95800 Cergy (FR); Monnerie, Nicolas, 21800 Quetigny (FR)
(74) Mandataire: Debay, Yves

(56) Documents cités:
- US-A- 5 070 413
- US-A- 5 455 600
- HECKBERT P: "Color image quantization for frame buffer display" COMPUT. GRAPH. (USA), COMPUTER GRAPHICS, JULY 1982, USA, vol. 16, no. 3, juillet 1982 (1982-07), pages 297-307, XP002292139 ISSN: 0097-8930
- FLETCHER P: "A SIMD PARALLEL COLOUR QUANTIZATION ALGORITHM" COMPUTERS AND GRAPHICS, PERGAMON PRESS LTD. OXFORD, GB, vol. 15, no. 3, 1991, pages 365-373, XP000224934 ISSN: 0097-8493

## Description

### DOMAINE TECHNIQUE DE L'INVENTION

La présente invention s'applique au domaine de l'électronique et plus particulièrement à l'établissement de signaux représentatifs de trames de couleurs pour permettre leur impression par un dispositif d'impression ou leur affichage par des moyens d'affichage (écrans LCD, CRT ou plasma). La présente invention concerne un procédé d'établissement de trames par diffusion d'erreur vectorielle utilisant des tables stockées dans une mémoire d'un dispositif pour déterminer l'erreur vectorielle des pixels successifs.

### ARRIERE-PLAN TECHNOLOGIQUE DE L'INVENTION

Une trame est un ensemble de lignes successives constituées de points successifs (ou pixels) dont les valeurs représentatives de l'arrangement bidimensionnel et des compositions chromatiques et/ou de luminance définissent une image. Le tramage correspond donc à l'attribution d'une couleur et/ou d'une luminance à chaque pixel de la trame.

Il est connu dans l'art antérieur des procédés de tramage par diffusion d'erreur dans lesquels les niveaux de gris des pixels d'une image en cours de tramage sont comparés à un seuil pour attribuer aux pixels la couleur noire ou la couleur blanche. A chaque comparaison avec un seuil, l'erreur correspondant à l'approximation réalisée est gardée en mémoire pour influencer la comparaison avec le seuil des pixels suivants dans la trame. L'erreur réalisée sur chaque pixel est donc diffusée sur les pixels voisins. Grâce à cette diffusion d'erreur, des pixels dont les différents niveaux de gris, par exemple codés sur 8 bits, ne sont pas directement imprimables ou affichables sont transformés en des pixels noirs ou blancs codés sur 1 bit dont la combinaison présente le même aspect visuel que les niveaux de gris d'origine.

Il est connu également des procédés de tramage par diffusion d'erreur vectorielle dans lesquels les couleurs subissent un changement de l'espace des couleurs. Au lieu d'être représentées par des couches de couleurs primaires, les couleurs sont représentées par des vecteurs dans un espace à plusieurs dimensions. Chaque composante chromatique (et/ou de luminance) correspond à une dimension de l'espace. Les caractéristiques chromatiques (et/ou de luminance) d'un pixel sont donc représentées par un vecteur dans cet espace pluridimensionnel. Parmi les vecteurs de cet espace, certains correspondent exactement à des combinaisons de couleurs directement imprimables ou affichables par les dispositifs d'impression ou d'affichage et sont appelés vecteurs de référence pour une combinaison de couleurs. Pour chaque vecteur représentatif d'un pixel couleur, le vecteur de référence le plus proche est recherché en calculant l'erreur vectorielle minimum (la différence minimum entre le vecteur représentatif du pixel et un des vecteurs de référence). L'erreur vectorielle introduite pour ce pixel est ensuite diffusée sur les pixels suivants pour influencer leur représentation vectorielle dans l'espace pluridimensionnel. En appliquant ce principe de diffusion d'erreur vectorielle, des pixels dont la couleur exacte (par exemple codée sur 32 bits) ne peut être imprimée ou affichée directement sont transformés en pixels composés de couleurs directement imprimables ou affichables (par exemple codée sur 8 bits) et dont la combinaison présente le même aspect visuel que les couleurs d'origine.

Ces procédés nécessitent, pour chaque pixel, le calcul du vecteur le plus proche du vecteur représentatif du pixel original, en tenant compte de l'erreur vectorielle réalisée sur les pixels voisins. Ces opérations de calcul demandent beaucoup de ressources, ce qui rend compliquée leur implémentation sur des circuits intégrés spécifiques d'une application (ASIC). La modernisation des dispositifs électroniques et la multiplication des couleurs directement imprimables ou affichables rendent le calcul de l'erreur vectorielle minimum de plus en plus complexe et lent.

Enfin, il est connu des procédés d'établissement de trames de signaux représentatifs d'une image, tels que ceux décrits dans les brevets EP 581514 et US 633 0075, réalisant le choix des couleurs des pixels à imprimer grâce à la consultation d'une ou plusieurs tables de conversion entre les couleurs de l'image originale et les couleurs disponibles dans les dispositifs auxquels la trame est destinée. Dans ces procédés, la couleur de sortie, attribuée à chacun des pixels grâce aux tables consultées, est comparée à la couleur d'entrée de l'image originale pour le calcul et la diffusion des erreurs réalisées sur les pixels traités. La modernisation des dispositifs électroniques et la multiplication des couleurs directement imprimables ou affichables entraînent une augmentation de la taille de ces tables de conversion, ce qui rend leur implémentation difficile et leur consultation lente.

Il est également connu, par le document Heckbert P. « Colour Image Quantization for frame buffer display», Computer Graphics, July 1982, USA, vol. 16, no. 3pages 297-307, une méthode de quantification des couleurs d'une image selon les étapes suivantes :
1) échantillonnage de l'image original pour la réalisation de calculs statistiques sur les couleurs ;
2) recherche d'une cartographie de représentation de ces couleurs de l'image d'après leur distribution statistique ;
3) représentation de ces couleurs de l'image par les couleurs déterminées comme étant leurs plus proches voisines dans cette cartographie de couleur ;
4) quantification de ces couleurs et restitution de l'image originale via cette cartographie.

Ce type de méthode permet de réaliser une approximation des données représentatives des couleurs de l'image originale au cours de la phase d'échantillonnage, de façon à diminuer dès le départ le nombre de couleurs différentes et augmenter leur fréquence d'apparition dans l'image. Ainsi, une réduction de la taille du tampon d'affichage peut être obtenue. Cependant, il est délicat de trouver un algorithme adéquat pour réaliser l'approximation au cours de la phase d'échantillonnage.

Il est également connu, par le document US 5 465 600, un procédé d'établissement de trame grâce à une table de correspondance entre des couleurs originales et des couleurs utilisables. Ce procédé prévoit une étape d'extension des limites de la gamme de couleurs pour contenir les couleurs des pixels malgré la diffusion d'erreur et un resserrage (« clamping ») des couleurs modifiées par la diffusion d'erreur, afin d'obtenir des couleurs modifiées inscrites dans les limites étendues de la gamme de couleurs. Avec ce te type de procédé, une réduction de la taille des tables de correspondance peut être obtenue à condition d'utiliser des calculs complexes de tramage par matrices.

Le document US 5 070 413 enseigne une méthode d'établissement de trame avec utilisation d'un filtre consistant en une matrice de facteurs pondérateurs des couleurs. Un surplus de calculs est requis selon cette méthode pour obtenir une image de sortie de qualité.

### DESCRIPTION GENERALE DE L'INVENTION

La présente invention a pour but de pallier certains inconvénients de l'art antérieur en proposant un procédé d'établissement de signaux de trames par diffusion d'erreur vectorielle qui est facilement implémentable dans des circuits intégrés et rapide, du fait qu'il ne nécessite pas le calcul systématique du vecteur de référence le plus proche du vecteur représentatif de chaque pixel et qu'il n'utilise pas de tables de dimensions trop importantes.

Ce but est atteint par un procédé d'établissement de signaux de trame par diffusion d'erreur vectorielle, réalisant une représentation des signaux représentatifs des pixels de l'image en « vecteurs » d'un espace tridimensionnel dont au moins une dimension correspond à une composante chromatique ou de luminance et dans lequel certains vecteurs, dits « vecteurs de référence », représentent une combinaison de couleurs directement imprimable ou affichable par les dispositifs auxquels la trame est destinée, caractérisé en ce qu'il comporte une étape d'extraction du vecteur de référence le plus proche d'un vecteur donné par consultation d'au moins une table de correspondance entre un indice d'entrée du vecteur donné dans la table de correspondance et un indice de référence du vecteur de référence le plus proche de ce vecteur donné, ladite table de correspondance étant de dimensions réduites par rapport au nombre de vecteurs de pixel couleur possibles, grâce au fait qu'un indice d'entrée dans cette table correspond à une pluralité de vecteurs possédant leur extrémité dans une même région dudit espace tridimensionnel, dans laquelle l'approximation de ces vecteurs au vecteur dont l'extrémité se trouve au centre de la région introduit une erreur invisible par l'oeil humain.

Selon une autre particularité, ledit procédé est tel que défini dans les revendications 2 à 7

Selon une autre particularité, la diffusion de l'erreur vectorielle mémorisée consiste en l'ajout, dans ledit espace pluridimensionnel, des coordonnées d'un vecteur d'erreur calculé et mémorisé pour un pixel aux coordonnées des vecteurs représentatifs des pixels suivants et voisins dans la trame.

Un autre but de l'invention est de proposer un dispositif, utilisable sur un appareil de prise d'image ou sur un appareil de représentation d'image (par exemple une imprimante), palliant les inconvénients de l'art antérieur.

Ce but est atteint par un dispositif d'établissement de trame de signaux, caractérisé en ce qu'il comporte une table de correspondance mémorisée dans une mémoire et contenant des indices de couleurs et/ou de luminance utilisables par un dispositif d'impression ou d'affichage, une mémoire de stockage de l'image à traiter, des moyens de conversion de chaque pixel de l'image sous forme d'un vecteur d'un espace dont au moins une dimension correspond à une composante chromatique et/ou de luminance de référence et de détermination d'un indice correspondant à ce vecteur pour accéder en lecture à la table de correspondance et des moyens de lecture dans la table de correspondance d'un indice de référence de couleur et/ou de luminance utilisable par un dispositif d'impression ou d'affichage.

### BREVE DESCRIPTION DES DESSINS

D'autres particularités et avantages de la présente invention apparaîtront plus clairement à la lecture de la description ci-après, faite en référence aux dessins annexés, dans lesquels :
- la figure 1 représente un schéma de l'algorithme itéré pour chaque pixel d'une image lors de la mise en oeuvre du procédé selon l'invention de tramage par diffusion d'erreur vectorielle issue d'une table ;
- la figure 2 représente un schéma du procédé selon l'invention de tramage par diffusion d'erreur vectorielle issue d'une table, pour un pixel donné de l'image ;
- la figure 3 représente un schéma de l'approximation réalisée au cours de la construction de la table de correspondance ;
- la figure 4 représente un schéma du principe de la construction de la table de correspondance.

### DESCRIPTION DES MODES DE REALISATION PREFERES DE L'INVENTION

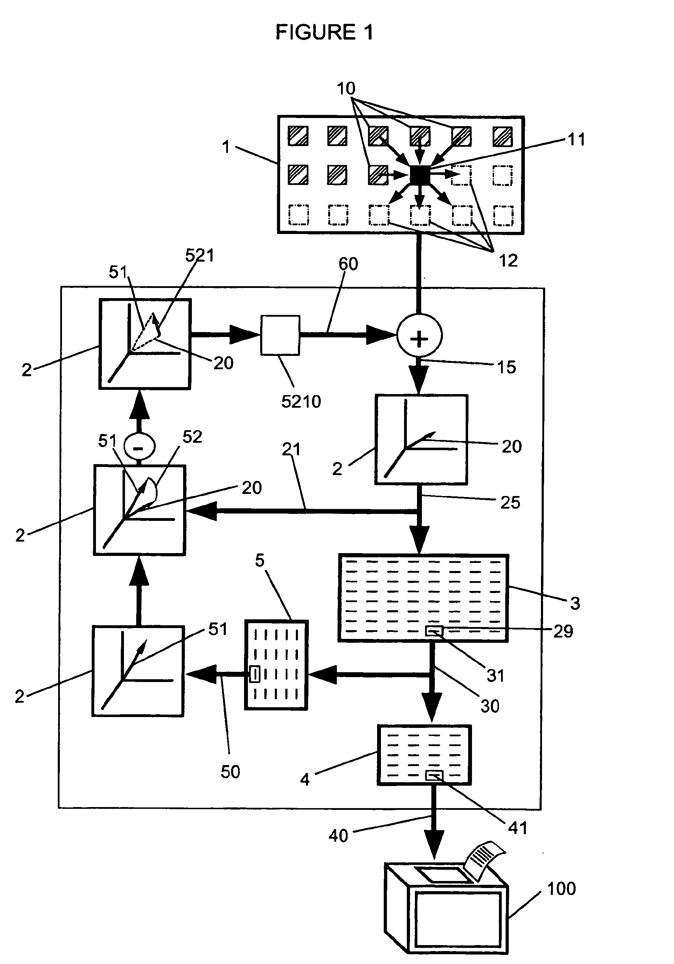

La présente invention sera décrite en relation avec les figures 1 à 4 et concerne un procédé et un dispositif d'établissement de trames (1) par diffusion d'erreurs vectorielles (52) issues d'une table (3). L'invention utilise un procédé de tramage par diffusion vectorielle classique mais repose sur l'utilisation d'une table (3) de correspondance. Le tramage par diffusion d'erreur vectorielle (52) réalise une représentation (15) des pixels successifs d'une image en vecteurs (20) dans un espace (2) pluridimensionnel, dont au moins certaines dimensions correspondent à des composantes chromatiques et/ou de luminance, grâce à des moyens de conversion de chaque pixel de l'image sous forme d'un vecteur d'un espace. Parmi ces vecteurs, certains représentent une combinaison de couleurs, dite de référence ou de base, directement imprimable ou affichable par les dispositifs auxquels la trame est destinée et sont appelés vecteurs de combinaison de couleur de référence, en abrégé vecteur de référence (51). Pour chaque vecteur (20) représentatif d'un pixel (11) en cours de traitement, le vecteur de référence (51) le plus proche est recherché en calculant l'erreur vectorielle (52) minimum, c'est-à-dire la distance minimum entre l'extrémité du vecteur (20) représentatif du pixel et l'extrémité d'un des vecteurs de référence (51). La figure 1 montre la nouveauté de la présente invention, qui consiste en ce que le choix du vecteur de référence (51 ) le plus proche du vecteur (20) représentant le pixel (11) en cours de traitement ne se fait pas par un calcul systématique de l'erreur vectorielle minimum pendant le tramage. Ce calcul systématique est remplacé par la consultation (30) d'une table de correspondance (3) stockée dans une mémoire, par exemple d'un dispositif permettant la capture de l'image (appareil photo ou caméra) ou la représentation de l'image (imprimante, afficheur). La consultation (30) de cette table de correspondance (3), grâce à des moyens de lecture dans la table, permet d'extraire un indice (31 ) de référence qui est ensuite convertit, grâce à une seconde table (4), en un indice (41) de couleur, directement utilisable (40) par les dispositifs (100) auxquels la trame est destinée. L'indice (31) de référence est également converti (50), grâce à une troisième table (5), en un vecteur (51) de référence qui permettra le calcul de l'erreur vectorielle (52) réalisée pour ce pixel. L'erreur vectorielle (52) introduite pour le pixel (11) traité est mémorisée dans une mémoire (5210) d'erreur et sera ensuite diffusée (60) aux pixels suivants et voisins dans la trame, par l'addition d'un vecteur d'erreur (521) mémorisé aux vecteurs représentatifs des pixels voisins et suivants. La trame est une représentation de l'image sous forme d'une matrice de pixels, dans une mémoire de stockage de l'image à traiter dans le dispositif d'établissement de trame. Les pixels suivants et voisins d'un pixel donné dans la trame sont celui qui suit ce pixel traité dans la même ligne et ceux se trouvant sur la ligne suivante et entourant ce pixel traité. La représentation (15) en vecteur (20) du pixel (11) en cours de traitement est influencée par les erreurs vectorielles introduites sur les pixels (10) précédents et voisins dans la trame.

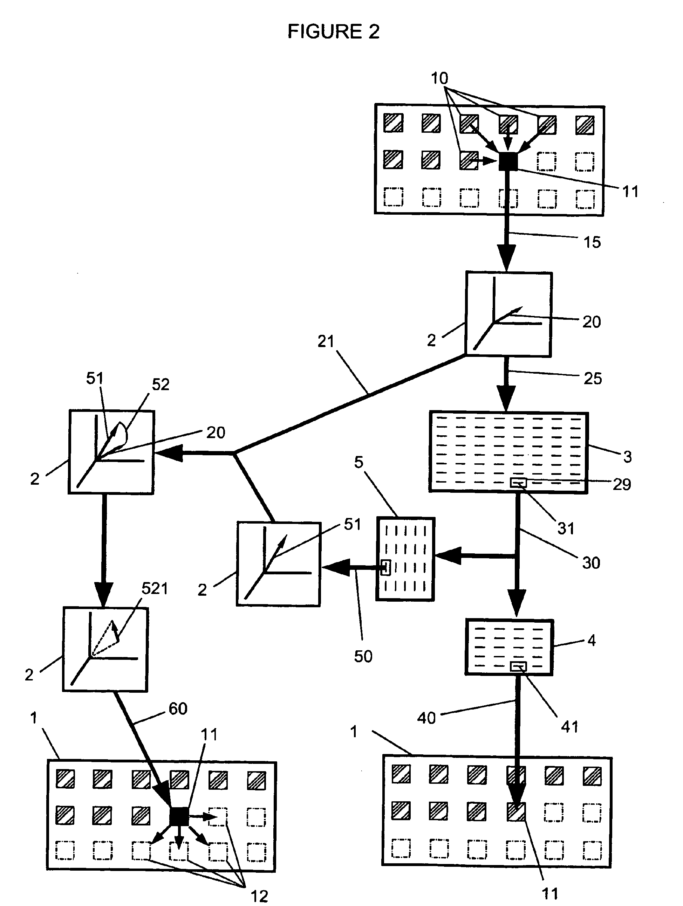

La figure 2 montre le procédé pour le traitement d'un pixel (11) donné, au cours de l'établissement d'une trame (1), dans laquelle les pixels déjà traités et mémorisés sont représentés en hachuré, les pixels mémorisés non traités sont représentés en pointillés et le pixel en cours de traitement est représenté en noir. Les flèches entre certains pixels de la trame symbolisent la diffusion d'erreur vectorielle. La représentation (15) du pixel (11) en cours de traitement en vecteur (20) dans l'espace (2) est influencée par les erreurs vectorielles réalisées sur les pixels (10) précédents et voisins dans la trame (1) (cette diffusion est représentée par les flèches dans la trame dans la partie supérieure droite du schéma). Les coordonnées de ce vecteur, stockées (21) en mémoire, sont converties (25), par une approximation décrite ci-après, en un indice (29) d'entrée dans la table (3) de correspondance qui permet l'extraction (30) de l'indice (31) de référence. Une table (4) de conversion d'indices permet la conversion (40) de cet indice (31) de référence en indice (41) qui définit une combinaison de couleurs directement utilisable par le dispositif auquel la trame (1) est destinée. Cet indice (41) permet donc d'attribuer une couleur au pixel (11) en cours de traitement (représenté en hachuré comme tous les pixels traités dans la trame de la partie inférieure droite du schéma). En parallèle de cette attribution de couleur, la consultation (50) d'une table (5) de conversion vectorielle permet, à partir de l'indice (31) de référence, de déterminer le vecteur (51) de référence correspondant. La comparaison des coordonnées de ce vecteur (51) de référence avec celles gardées en mémoire du vecteur (20) représentatif du pixel (11) en cours de traitement définit l'erreur vectorielle (52) réalisée sur ce pixel (11). Cette erreur vectorielle consiste en un vecteur (521) d'erreur qui est mémorisé dans une mémoire (5210) d'erreur et qui sera ajouté aux coordonnées des vecteurs représentant les pixels suivants dans la trame (1). Cette diffusion (60) d'erreur vectorielle est représentée par les flèches du pixel (11) en cours de traitement vers les suivants (12) dans la trame représentée dans la partie inférieure gauche du schéma.

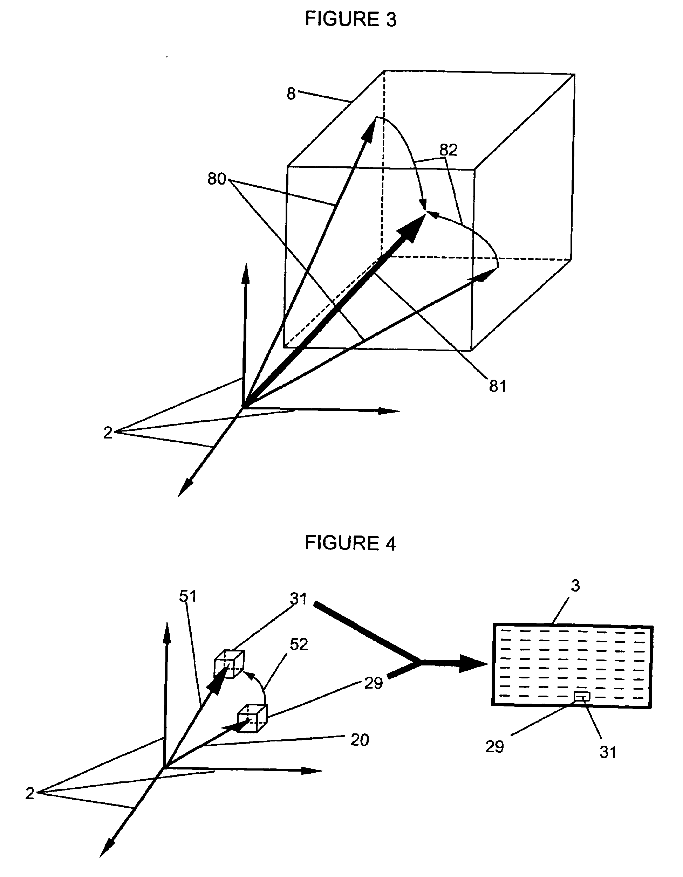

Au lieu d'être effectué systématiquement pendant le tramage, le calcul de l'erreur vectorielle (52) minimum, pour rechercher le vecteur de référence le plus proche du vecteur représentatif du pixel en cours de traitement, est réalisé lors de la construction de la table de correspondance et les résultats, convertis en indices, sont stockés dans cette table (3). Lors de la construction de la table de correspondance, la conversion des résultats en indices d'entrée dans la table permet une réduction du nombre de valeurs à stocker. En effet, à chaque indice d'entrée dans la table correspondent plusieurs vecteurs dont les coordonnées sont considérées comme équivalentes. Cette équivalence est établie en fonction du pouvoir de résolution de l'oeil humain dans les différentes dimensions de l'espace (2) utilisé pour la représentation des pixels. La figure 3 représente l'approximation réalisée, par laquelle un indice définit un volume (8) correspondant à des plages de coordonnées dans lesquelles plusieurs vecteurs (80) possèdent leur extrémité. Tous ces vecteurs (80) sont assimilés au vecteur (81) dont l'extrémité se trouve au centre du volume (8) de coordonnées défini par un indice d'entrée dans la table. La différence entre un vecteur de la plage de coordonnées et le vecteur dont l'extrémité se trouve au centre de cette plage introduit une erreur (82) d'approximation. La taille de la plage de coordonnées est calculée de façon à ce que l'erreur d'approximation maximum soit inférieure, égale ou légèrement supérieure au pouvoir de résolution de l'oeil humain. Ainsi, un nombre réduit d'indices d'entrée dans la table permet alors de définir tout l'espace (2) pluridimensionnel, tout en conservant une qualité d'image acceptable. La construction de la table, représentée sur la figure 4, consiste à calculer l'erreur vectorielle (52) minimum, pour chaque indice (29) définissant une plage de coordonnées dans laquelle plusieurs vecteurs (20) peuvent avoir leur extrémité, en recherchant le vecteur (51) de référence le plus proche du vecteur dont l'extrémité se trouve au centre de cette plage de coordonnées. L'indice du vecteur (51) de référence choisi grâce à ce calcul est inscrit dans la table (3) de correspondance comme indice (31) de référence, en relation avec l'indice (29) définissant une plage de coordonnées.

Au cours de l'établissement d'une trame (1), le procédé selon l'invention est itéré pour tous les pixels de la trame, comme représenté sur la figure 1. Les données représentatives du pixel (11) en cours de traitement sont converties en données représentant un vecteur (20) dans ledit espace (2) défini et les coordonnées du vecteur sont gardées (21) en mémoire. Un calcul (25) simple permet de déterminer dans quelle plage de coordonnées son extrémité est inscrite et donc quel indice (29) le définit en entrée de la table (3) de correspondance. Ce calcul (25) correspond à une approximation (82, figure 3) des coordonnées du vecteur et consiste à arrondir les valeurs, par exemple par troncature des poids faibles dans le code binaire représentatif des coordonnées du vecteur. Grâce à cet indice (29) d'entrée du vecteur (20) représentant le pixel (11) en cours de traitement, une consultation (30) de la table (3) de correspondance aboutit à lire, à la position définie par l'indice d'entrée, l'indice (31) de référence du vecteur (51) de référence le plus proche du vecteur (20) représentant le pixel (11) en cours de traitement. Cet indice (31) de référence est ensuite converti, grâce à une autre table (4), en un indice (41) de couleur et/ou de luminance directement utilisable par le dispositif (100) auquel la trame est destinée. Cette table (4) de conversion d'indices contient les indices (41) des couleurs disponibles dans les dispositifs (100) auxquels la trame est destinée, en relation avec les indices (31) de référence de la table (3) de correspondance. Le résultat (41) de cette conversion est transmis (40) au dispositif (100) d'utilisation. Cette conversion peut également consister en un calcul, par exemple dans le cas d'un rapport fixe entre les deux indices. Pour éventuellement éviter cette étape de conversion, les valeurs exactes des indices de référence peuvent avoir été établies de façon à ce qu'elles soient directement utilisables par les dispositifs auxquels la trame est destinée. L'indice (31) de référence est également converti en coordonnées de vecteur (51) de référence dans ledit espace (2) grâce à la consultation (50) d'une table (5) de conversion vectorielle. Un vecteur d'erreur (521), défini par la différence entre les coordonnées du vecteur (51) de référence et celles, gardées en mémoire, du vecteur (20) représentatif du pixel en cours de traitement, est calculé pour déterminer l'erreur vectorielle (52) du pixel traité, à diffuser aux pixels suivants et voisins dans la trame. La diffusion (60) de cette erreur vectorielle consistera à ajouter les coordonnées de ce vecteur d'erreur (521) aux coordonnées des vecteurs représentant les pixels suivants et voisins dans la trame. Tous les pixels de la trame sont donc représentés par des vecteurs dont les coordonnées sont ajustées en fonction des éventuelles erreurs vectorielles réalisées sur les pixels suivants et voisins. On comprend que l'on a ainsi réalisé un procédé d'établissement de trame par diffusion d'erreurs vectorielles issues de tables

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'établissement de trame (1) par diffusion d'erreur vectorielle, réalisant une représentation (15) des pixels en dits « vecteurs » (20) dans un espace (2) pluridimensionnel dont au moins une dimension correspond à une composante chromatique ou de luminance et une étape de calcul (25) d'approximation du vecteur (20) du pixel (11) en cours de traitement, au cours de laquelle une pluralité de vecteurs (80) possédant leur extrémité dans une même région (8) dudit espace (2) pluridimensionnel sont approximés au vecteur (81) dont l'extrémité se trouve au centre de cette région (8), en introduisant une erreur (82) d'approximation invisible par l'oeil humain , **caractérisé en ce que**, pour le vecteur (20) de chaque pixel (11) en cours de traitement, ledit calcul (25) d'approximation est directement suivi d'une étape de détermination d'une composition chromatique et/ou de luminance directement imprimable ou affichable par les dispositifs auxquels la trame est destinée, cette détermination étant réalisée par consultation (30) d'une table (3) de correspondance entre un indice (29) d'entrée correspondant à une région (8) dans laquelle se trouve l'extrémité dudit vecteur (20) et un indice (31) de référence d'un vecteur (51) de référence le plus proche dudit vecteur (20)et représentant une composition chromatique et/ou de luminance directement imprimable ou affichable par les dispositifs auxquels la trame est destinée.

2. Procédé d'établissement de trame selon la revendication 1, **caractérisé en ce qu'**il consiste en la répétition des étapes suivantes pour chaque pixel de la trame (1) :
- représentation (15) d'un pixel (11) dans ledit espace (2) sous la forme d'un vecteur (20) dont les coordonnées sont stockées (21) en mémoire après ajustement, en fonction des erreurs vectorielles mémorisées éventuellement introduites sur les pixels (10) précédents et voisins dans la trame ;
- calcul (25) d'approximation de ce vecteur (20) représentatif du pixel (11) en cours de traitement pour déterminer l'indice (29) d'entrée de ce vecteur (20) dans ladite table (3) de correspondance ;
- extraction (30), à partir de ladite table (3) de correspondance, de l'indice (31) de référence du vecteur (51) de référence le plus proche de ce vecteur (20) représentatif du pixel (11), inscrit en relation avec l'indice (29) calculé pour ce vecteur représentatif du pixel ;
- conversion (40) de cet indice (31) de référence extrait en un indice (41) de couleur et/ou de luminance, directement utilisable par le dispositif (100) d'impression ou d'affichage ;
- conversion (50) de cet indice (31) de référence extrait en coordonnées de vecteur (51) de référence dans ledit espace (2) et calcul de l'erreur vectorielle (52) introduite pour ce pixel ;
- enregistrement de cette erreur vectorielle (52) introduite pour ce pixel et diffusion (60) aux pixels suivants et voisins dans la trame, lors de leur représentation (15) en vecteurs.

3. Procédé d'établissement de trame selon l'une des revendications 1 et 2, **caractérisé en ce que** les valeurs contenues dans ladite table (3) de correspondance ont été calculées par répétition des étapes suivantes pour chaque indice de la table de correspondance :
- détermination de la plage de coordonnées de vecteurs (20) définie par un indice (29) de ladite table (3) de correspondance et calcul du vecteur dont l'extrémité est au centre de cette plage de coordonnées ;
- détermination des indices (31) de référence définissant les plages de coordonnées contenant les vecteurs (51) de référence ;
- recherche du vecteur (51) de référence le plus proche du vecteur dont l'extrémité est au centre de la plage de coordonnées définie par l'indice ;
- inscription de l'indice (31) de préférence choisi en relation avec l'indice (29) des plages de coordonnées de vecteurs.

4. Procédé d'établissement de trame selon l'une des revendications 1 à 3, **caractérisé en ce que** le calcul (25) d'approximation de l'indice d'entrée dans ladite table (3) de correspondance du vecteur (20) représentatif du pixel (11) en cours de traitement, équivalent à la détermination de la plage de coordonnées dans laquelle se trouve ce vecteur, consiste à réduire la précision des coordonnées de ce vecteur et constitue une approximation du vecteur au vecteur dont l'extrémité se trouve au centre de la plage de coordonnées dans laquelle l'extrémité du vecteur est comprise.

5. Procédé d'établissement de trame selon l'une des revendications 2 à 4, **caractérisé en ce que** l'étape de conversion (40) de l'indice (31) de référence extrait en indice (41) de couleur et/ou de luminance directement utilisable par le dispositif (100) d'impression ou d'affichage est réalisée par consultation d'une table (4) de conversion d'indices contenant, en relation avec les indices (31) de référence de la table de correspondance, des valeurs utilisables par les dispositifs (100) d'impression ou d'affichage pour déterminer les caractéristiques chromatiques et/ou de luminance d'un point.

6. Procédé d'établissement de trame selon l'une des revendications 2 à 4, **caractérisé en ce que** l'étape de conversion (40) de l'indice (31) de référence extrait est omise grâce au fait que les valeurs des indices de référence ont été établies de façon à ce qu'elles soient directement utilisables par les dispositifs auxquels la trame est destinée.

7. Procédé d'établissement de trame selon l'une des revendications 2 à 6, **caractérisé en ce que** l'étape de conversion (50) de l'indice (31) de référence extrait de ladite table (3) de correspondance en coordonnées de vecteur (51) de référence dans ledit espace (2) est réalisée par consultation d'une table (5) de conversion vectorielle contenant les coordonnées des vecteurs (51) de référence dans ledit espace (2) en relation avec leurs indices (31) de référence dans la table de correspondance.

8. Procédé d'établissement de trame selon l'une des revendications 2 à 6, **caractérisé en ce que** le calcul de l'erreur vectorielle (52) consiste en le calcul d'un vecteur d'erreur (521) dont les coordonnées, dans ledit espace (2) pluridimensionnel, sont égales à la différence entre les coordonnées du vecteur (51) de référence extrait et celles, gardées en mémoire, du vecteur (20) représentatif du pixel (11) en cours de traitement.

9. Procédé d'établissement de trame selon l'une des revendications 2 à 8, **caractérisé en ce que** la diffusion (60) de l'erreur vectorielle mémorisée consiste en l'ajout, dans ledit espace (2) pluridimensionnel, des coordonnées d'un vecteur d'erreur (521) calculé et mémorisé pour un pixel (11) aux coordonnées des vecteurs représentatifs des pixels (12) suivants et voisins dans la trame (1).

10. Dispositif d'établissement de trame (1), pour la mise en oeuvre du procédé selon une des revendications 1 à 9, **caractérisé en ce qu'**il comporte une table (3) de correspondance mémorisée dans une mémoire et contenant des indices de couleurs et/ou de luminance utilisables par un dispositif (100) d'impression ou d'affichage, une mémoire de stockage de l'image à traiter, des moyens de conversion de chaque pixel de l'image sous forme d'un vecteur (20) d'un espace (2) dont au moins une dimension correspond à une composante chromatique et/ou de luminance de référence et de détermination d'un indice correspondant à ce vecteur pour accéder en lecture à la table de correspondance et des moyens de lecture dans la table de correspondance d'un indice de référence de couleur et/ou de luminance utilisable par un dispositif d'impression ou d'affichage.

## Claims

1. Method of establishing a frame (1) by vector error diffusion, effecting a representation (15) of pixels in so-called "vectors" (20) in a multidimensional space (2) of which at least one dimension corresponds to a chromatic component or luminance component and a calculation step of approximation of the vector (20) of the pixel (11) being processed, during which a plurality of vectors (80) having their end in one and the same region (8) of the said multidimensional space (2) are approximated to the vector (81) of which the end is located at the centre of this region (8), by introducing, an approximation error (82) which is invisible to the human eye, **characterised in that**, for the vector (20) of each pixel (11) being processed the said approximation calculation (25) is directly followed by a step of determination of a chromatic composition and/or a luminance composition which can be directly printed or displayed by the devices for which the frame is intended, this determination being performed by consultation (30) of a correspondence table (3) between an input index (29) corresponding to a region (8) in which the end of the said vector (20) is located and a reference index (31) of a reference vector (51) closest to the said vector (20) and representing a chromatic composition and/or a luminance composition which can be directly printed or displayed by the devices for which the frame is intended.

2. Method of establishing a frame as claimed in Claim 1, **characterised in that** it consists of the repetition of the following steps for each pixel of the frame (1):
- representation (15) of a pixel (11) in the said space (2) in the form of a vector (20) of which the co-ordinates are stored (21) in a memory after adjustment, as a function of the stored vector errors possibly introduced on the preceding and neighbouring pixels (10) in the frame;
- calculation (25) for approximation of this vector (20) representing the pixel (11) being processed in order to determine the input index (29) of this vector (20) in the said correspondence table (3);
- extraction (30) from the said correspondence table (3) of the reference index (31) of the reference vector (51) closest to this vector (20) representing the pixel (11), registered in relation to the index (29) calculated for this vector representing the pixel;
- conversion (40) of this extracted reference index (31) into a colour and/or luminance index (41) which can be used directly by the printing or display device (100);
- conversion (50) of this extracted reference index (31) into reference vector co-ordinates (51) in the said space (2) and calculation of the vector error (52) introduced for this pixel;
- recording of this error vector (52) introduced for this pixel and diffusion (60) to the following and neighbouring pixels in the frame during their representation (15) in vectors.

3. Method of establishing a frame as claimed in any one of Claims 1 and 2, **characterised in that** the values contained in the said correspondence table (3) have been calculated by repetition of the following steps for each index of the correspondence table:
- determination of the range of vector co-ordinates (20) defined by an index (29) of the said correspondence table and calculation of the vector of which the end is at the centre of this range of co-ordinates;
- determination of the reference indices (31) defining the ranges of co-ordinates containing the reference vectors (51);
- searching for the reference vector (51) closest to the vector of which the end is at the centre of the range of co-ordinates defined by the index;
- recording of the reference index (31) chosen in relation to the index (29) of the ranges of vector co-ordinates.

4. Method of establishing a frame as claimed in any one of Claims 1 to 3, **characterised in that** the calculation (25) for approximation of the input index in the said correspondence table of the vector (20) representing the pixel (11) being processed, equivalent to the determination of the range of co-ordinates in which this vector is located, consists of reducing the precision of the co-ordinates of this vector and constitutes an approximation of the vector to the vector of which the end is located at the centre of the range of co-ordinates in which the end of the vector is comprised.

5. Method of establishing a frame as claimed in any one of Claims 2 to 4, **characterised in that** the step of conversion (40) of the extracted reference index (31) into a colour and/or luminance index (41) which can be used directly by the device (100) for printing or display is effected by consultation of a table (4) for conversion of indices containing, in relation to the reference indices (31) of the correspondence table, values which can be used by the printing or display devices (100) in order to determine the chromatic and/or luminance characteristics of a point.

6. Method of establishing a frame as claimed in any one of Claims 2 to 4, **characterised in that** the step of conversion (40) of the extracted reference index (31) is omitted by virtue of the fact that the values of the reference indices have been established in such a way that they can be used directly by the devices for which the frame is intended.

7. Method of establishing a frame as claimed in any ane of Claims 2 to 6, **characterised in that** the step of conversion (50) of the reference index (31) extracted from the said correspondence table (3) into reference vector co-ordinates (51) in the said space (2) is effected by consultation of a table (5) for vector conversion containing the reference vector co-ordinates (51) in the said space (2) in relation to their reference indices (31) in the correspondence table.

8. Method of establishing a frame as claimed in any one of Claims 2 to 6, **characterised in that** the calculation of the vector error (52) consists of the calculation of an error vector (521) of which the co-ordinates, in the said multidimensional space (2), are equal to the difference between the co-ordinates of the extracted reference vector (51) and those, kept in the memory, of the vector (20) representing the pixel (11) being processed.

9. Method of establishing a frame as claimed in any one of Claims 2 to 8, **characterised in that** the diffusion (60) of the stored vector error consists of the addition, in the said multidimensional space (2), of the co-ordinates of an error vector (521) calculated and memorised for a pixel (11) to the co-ordinates of the vectors representing the following and neighbouring pixels (12) in the frame (1).

10. Device for establishing a frame (1) for implementing the method as claimed in any one of Claims 1 to 9, **characterised in that** it includes a correspondence table stored in a memory and containing colour and/or luminance indices which can be used by a printing or display device (100), a memory for storage of the image to be processed, means for conversion of each pixel of the image in the form of a vector (20) of a space (2) of which at least one dimension corresponds to a reference chromatic and/or luminance component and for determination of an index corresponding to this vector for read access to the correspondence table and means for reading in the correspondence table of a colour and/or luminance reference index which can be used by a printing or display device.

## Patentansprüche

1. Verfahren zur Erstellung eines Teilbilds (1) durch Vektorfehlerstreuung, wobei eine Darstellung (15) von Pixeln in so genannten "Vektoren" (20) in einem multidimensionalen Raum (2), von dem mindestens eine Dimension einer chromatischen oder Helligkeitskomponente entspricht, und ein Schritt zur Berechnung (25) der Näherung des Vektors (20) des Pixels (11) in Bearbeitung durchgeführt werden, in dessen Verlauf mehrere Vektoren (80), die ihr Ende in ein und derselben Region (8) des multidimensionalen Raums (2) haben, an den Vektor (81) genähert werden, dessen Ende sich in der Mitte dieser Region (8) befindet, indem ein Näherungsfehler (82) eingeführt wird, der für das menschliche Auge unsichtbar ist, **dadurch gekennzeichnet, dass** für den Vektor (20) jedes Pixels (11) in Bearbeitung die Berechnung (25) der Näherung direkt auf einen Schritt zur Bestimmung einer chromatischen und/oder Helligkeitszusammensetzung folgt, die durch die Vorrichtungen, für die das Teilbild bestimmt ist, direkt ausdruckbar oder anzeigbar ist, wobei diese Bestimmung durch Nachschlagen (30) in einer Tabelle (3) der Zuordnung zwischen einem Eingangsindex (29), der einer Region (8) entspricht, in der sich das Ende des Vektors (20) befindet, und einem Bezugsindex (31) eines Bezugsvektors (51), der dem Vektor (20) am nächsten ist und eine chromatische und/oder Helligkeitszusammensetzung darstellt, die durch die Vorrichtungen, für die das Teilbild bestimmt ist, direkt ausdruckbar oder anzeigbar ist, durchgeführt wird.

2. Verfahren zur Erstellung eines Teilbilds nach Anspruch 1, **dadurch gekennzeichnet, dass** es in dem Wiederholen der folgenden Schritte für jedes Pixel des Teilbilds (1) besteht:
- Darstellung (15) eines Pixels (11) in dem Raum (2) in der Form eines Vektors (20), dessen Koordinaten nach einer Anpassung in Abhängigkeit von gespeicherten, eventuell an den vorhergehenden und benachbarten Pixeln (10) in dem Teilbild eingeführten Vektorfehlern in einem Speicher gespeichert werden (21);
- Berechnung (25) der Näherung dieses Vektors (20), der für das Pixel (11) in Bearbeitung repräsentativ ist, um den Eingangsindex (29) dieses Vektors (20) in der Zuordnungstabelle (3) zu bestimmen;
- Extraktion (30) des Bezugsindexes (31) des Bezugsvektors (51), der diesem Vektor (20) am nächsten ist, der für das Pixel (11) repräsentativ ist, und der in Bezug auf den Index (29) eingetragen ist, der für diesen Vektor berechnet wurde, der für das Pixel repräsentativ ist, aus der Zuordnungstabelle (3);
- Umwandlung (40) dieses extrahierten Bezugsindexes (31) in einen Farb- und/oder Helligkeitsindex (41), der durch die Druck- oder Anzeigevorrichtung (100) direkt verwendbar ist;
- Umwandlung (50) dieses extrahierten Bezugsindexes (31) in Koordinaten des Bezugsvektors (51) in dem Raum (2) und Berechnung des für dieses Pixel eingeführten Vektorfehlers (52);
- Aufzeichnung dieses für diesen Pixel eingeführten Vektorfehlers (52) und Streuung (60) der folgenden und benachbarten Pixel in dem Teilbild während deren Darstellung (15) in Vektoren.

3. Verfahren zur Erstellung eines Teilbilds nach einem der Ansprüche 1 und 2, **dadurch gekennzeichnet, dass** die in der Zuordnungstabelle (3) enthaltenen Werte durch Wiederholung der folgenden Schritte für jeden Index der Zuordnungstabelle berechnet wurden:
- Bestimmung des Bereichs von Koordinaten der Vektoren (20), der durch einen Index (29) der Zuordnungstabelle (3) definiert wird, und Berechnung des Vektors, dessen Ende sich in der Mitte dieses Koordinatenbereichs befindet;
- Bestimmung der Bezugsindizes (31), die die
Koordinatenbereiche definieren, die die Bezugsvektoren (51) enthalten;
- Suche des Bezugsvektors (51), der dem Vektor am nächsten ist, dessen Ende sich in der Mitte des Koordinatenbereichs befindet, der durch den Index definiert wird;
- Eintragung des ausgewählten Bezugsindexes (31) in Bezug auf den Index (29) von Koordinatenbereichen der Vektoren.

4. Verfahren zur Erstellung eines Teilbilds nach einem der Ansprüche 1 bis 3, **dadurch gekennzeichnet, dass** die Berechnung (25) der Näherung des Eingangsindexes in der Zuordnungstabelle (3) des Vektors (20), der für das Pixel (11) in Bearbeitung repräsentativ ist, die der Bestimmung des Koordinatenbereichs entspricht, in der sich dieser Vektor befindet, in dem Verringern der Präzision der Koordinaten diese Vektors besteht und eine Näherung des Vektors an den Vektor bildet, dessen Ende sich in der Mitte des Koordinatenbereichs befindet, der das Ende des Vektors umfasst.

5. Verfahren zur Erstellung eines Teilbilds nach einem der Ansprüche 2 bis 4, **dadurch gekennzeichnet, dass** der Schritt zur Umwandlung (40) des extrahierten Bezugsindexes (31) in einen Farb- und/oder Helligkeitsindex (41), der durch die Druck- oder Anzeigevorrichtung (100) direkt verwendbar ist, durch Nachschlagen in einer Tabelle (4) der Umwandlung von Indizes durchgeführt wird, die Werte, die durch die Druck- oder Anzeigevorrichtungen (100) verwendbar sind, in Bezug auf die Bezugsindizes (31) der Zuordnungstabelle enthält, um die chromatischen und/oder Helligkeitscharakteristika eines Punkts zu bestimmen.

6. Verfahren zur Erstellung eines Teilbilds nach einem der Ansprüche 2 bis 4, **dadurch gekennzeichnet, dass** der Schritt zur Umwandlung (40) des extrahierten Bezugsindexes (31) weggelassen wird, weil die Werte der Bezugsindizes derart erstellt wurden, dass sie durch die Vorrichtungen, für die das Teilbild bestimmt ist, direkt verwendbar sind.

7. Verfahren zur Erstellung eines Teilbilds nach eine der Ansprüche 2 bis 6, **dadurch gekennzeichnet, dass** der Schritt zur Umwandlung (50) des aus der Zuordnungstabelle (3) extrahierten Bezugsindexes (31) in Koordinaten des Bezugsvektors (51) in dem Raum (2) durch Nachschlagen in einer Vektorumwandlungstabelle (5) durchgeführt wird, die die Koordinaten der Bezugsvektoren (51) in dem Raum (2) in Bezug auf deren Bezugsindizes (31) in der Zuordnungstabelle enthält.

8. Verfahren zur Erstellung eines Teilbilds nach einem der Ansprüche 2 bis 6, **dadurch gekennzeichnet, dass** die Berechnung des Vektorfehlers (52) in der Berechnung eines Fehlervektors (521) besteht, dessen Koordinaten in dem multidimensionalen Raum (2) dem Unterschied zwischen den Koordinaten des extrahierten Bezugsvektors (51) und den im Speicher aufbewahrten Koordinaten des Vektors (20), der für das Pixel (11) in Bearbeitung repräsentativ ist, gleich sind.

9. Verfahren zur Erstellung eines Teilbilds nach einem der Ansprüche 2 bis 8, **dadurch gekennzeichnet, dass** die Streuung (60) des gespeicherten Vektorfehlers in der Hinzufügung von Koordinaten eines für ein Pixel (11) berechneten und gespeicherten Fehlervektors (521) zu den Koordinaten von repräsentativen Vektoren von folgenden und benachbarten Pixeln (12) in dem Teilbild in dem multidimensionalen Raum (2) besteht.

10. Vorrichtung zur Erstellung eines Teilbilds (1) zur Durchführung des Verfahrens nach einem der Ansprüche 1 bis 9, **dadurch gekennzeichnet, dass** sie eine Zuordnungstabelle (3), die in einem Speicher gespeichert ist und Farb- und/oder Helligkeitsindizes enthält, die durch eine Druck- oder Anzeigevorrichtung (100) verwendbar sind, einen Speicher zur Speicherung des zu bearbeitenden Bilds, Mittel zur Umwandlung jedes Pixels des Bilds in der Form eines Vektors (20) eines Raums (2), von dem mindestens eine Dimension einer chromatischen und/oder Helligkeitsbezugskomponente entspricht, und zur Bestimmung eines Indexes umfasst, der diesem Vektor entspricht, um durch Lesen mit der Zuordnungstabelle und Mitteln zum Lesen in der Zuordnungstabelle zu einem Farb- und/oder Helligkeitsbezugsindex zu gelangen, der durch eine Druck- oder Anzeigevorrichtung verwendbar ist.
